# EUROPEAN PATENT APPLICATION

(11) **EP 4 726 203 A1**
(43) Date of publication of application: **15.04.2026**
(21) Application number: 24206174.5
(22) Date of filing: 11.10.2024
(51) Int. Cl.: F03D 7/02, F03D 7/04, F03D 17/00, F03D 80/00

(54) **A METHOD AND A SYSTEM FOR HANDLING PHYSICAL INTRUSION IN A WIND TURBINE**

(71) Applicant: VESTAS WIND SYSTEMS A/S, 8200 Aarhus N (DK)
(72) Inventor: Carvalho da Costa Campos, Marco Alexandre, 4760-726 Ribeirão (PT)
(74) Representative: Vestas Patents Department

(57) **Abstract**

A method for handling physical intrusion in a wind turbine (1) is disclosed. An intrusion detection system (3) detects an intrusion event in the wind turbine (1), generates a first intrusion alert signal and provides the first intrusion alert signal to a control system (4) of the wind turbine (1). In response to receiving the first intrusion alert signal, the control system (4) initiates at least one safety action at the wind turbine (1), wherein the at least one safety action comprises stopping power production of the wind turbine (1) and providing a second intrusion alert signal to an intrusion monitoring system (6). The intrusion monitoring system (6) communicatively isolates the wind turbine (1).

## Description

### FIELD OF THE INVENTION

The present invention relates to a method for handling physical intrusion in a wind turbine, e.g. a wind turbine arranged at a remote location, such as at an offshore site. The method according to the invention addresses safety of the intruder as well as protection of hardware and software of the wind turbine. The invention further provides a system for performing the method.

### BACKGROUND OF THE INVENTION

Wind turbines are often arranged at remote locations, in order to ensure sufficient distance to inhabited areas, as well as in order to ensure that sufficient wind resources are available for efficient operation of the wind turbines. Such remote locations include offshore locations, but could also be onshore locations. In any event, arranging wind turbines in remote locations has the consequence that the wind turbines are not easily accessible. For instance, it may take one or more days for a service technician or a surveillance officer to reach the remote location. Furthermore, regular manual surveillance of the site and/or efficient fencing in of the site, in order to prevent or discourage malicious intruders from entering the site and reaching the wind turbines within the site, may not be an option. This is in particular the case when the wind turbines form part of wind farms covering a large area. It is therefore desirable to provide a method and a system for handling physical intrusion in a wind turbine, without requiring the presence of maintenance or surveillance staff at the site of the wind turbine.

### DESCRIPTION OF THE INVENTION

It is an object of embodiments of the invention to provide a method for remotely handling physical intrusion in a wind turbine in a safe and efficient manner.

It is a further object of embodiments of the invention to provide a system for remotely handling physical intrusion in a wind turbine in a safe and efficient manner.

According to a first aspect the invention provides a method for handling physical intrusion in a wind turbine, the wind turbine forming part of a wind farm comprising a plurality of wind turbines, the method comprising the steps of:
- detecting an intrusion event in the wind turbine by means of an intrusion detection system,
- the intrusion detection system generating a first intrusion alert signal and providing the first intrusion alert signal to a control system of the wind turbine,
- in response to receiving the first intrusion alert signal, the control system of the wind turbine initiating at least one safety action at the wind turbine, wherein the at least one safety action comprises stopping power production of the wind turbine and providing a second intrusion alert signal to an intrusion monitoring system, and
- the intrusion monitoring system communicatively isolating the wind turbine.

Thus, according to the first aspect, the invention provides a method for handling physical intrusion in a wind turbine. In the present context the term 'physical intrusion' should be interpreted to mean an incident where at least one intruder, in the form of an unauthorised, or even malicious, person physically gains access to the wind turbine, at the site of the wind turbine. This is contrary to electronic intrusion, such as a cyber attack, where the intruder attempts to gain access to electronic and/or communication systems of the wind turbine from a location being remote with respect to the wind turbine. Thus, in the incidents handled by means of the method according to the first aspect of the invention, the intruder is physically present at the site of the wind turbine.

The wind turbine forms part of a wind farm comprising a plurality of wind turbines. In the present context the term 'wind farm' should be interpreted to mean a collection of two or more wind turbines arranged within a limited geographical area, the wind turbines sharing various infrastructure, such as access roads, communication lines, connection to power grid, substations, etc.

In the method according to the first aspect of the invention, an intrusion event in the wind turbine is initially detected by means of an intrusion detection system. The intrusion detection system may, e.g., include one or more relevant sensors for detecting the intrusion event, such as a sensor detecting opening of an access door formed in the tower of the wind turbine, movement sensors inside the wind turbine and/or in the immediate vicinity of the wind turbine, etc. Accordingly, the step of detecting an intrusion event may include detecting the presence of one or more persons inside the wind turbine or in the immediate vicinity of the wind turbine. Alternatively or additionally, the step of detecting an intrusion event may include detecting that one or more components and/or equipment inside and/or at the wind turbine has been tampered with. In any event, the detection of the intrusion event takes place locally at the wind turbine, and the intrusion detection system may form part of the wind turbine. Accordingly, the detection of the intrusion event takes place immediately when the intrusion event takes place, and without requiring that maintenance or surveillance staff is present at the site of the wind turbine.

In response to detecting the intrusion event, the intrusion detection system generates a first intrusion alert signal and provides the first intrusion alert signal to a control system of the wind turbine. Thus, the controller being responsible for the operation of the wind turbine is notified that an intrusion event has occurred.

In response to receiving the first intrusion alert signal, the control system of the wind turbine initiates at least one safety action at the wind turbine. The at least one safety action comprises stopping power production of the wind turbine. Thus, the wind turbine is brought into a safe mode where no power production takes place. This ensures that it is not possible to operate the wind turbine in a manner which may cause damage to the wind turbine, or which may be detrimental to the power grid. Thus, the intruder will not be able to cause the wind turbine to operate in such a manner. Furthermore, stopping the power production ensures that voltage levels occurring in the wind turbine are such that it does not pose a safety hazard to persons being present inside the wind turbine, including the intruder.

The control system of the wind turbine further provides a second intrusion alert signal to an intrusion monitoring system. The second intrusion alert signal may simply be the first intrusion alert signal which the control system of the wind turbine forwards to the intrusion monitoring system. Alternatively, the second intrusion alert signal may differ from the first intrusion alert signal. In this case the control system of the wind turbine may generate the second intrusion alert signal. For instance, the second intrusion alert signal may include information also included in the first intrusion alert signal, and may further include additional information generated and/or added by the control system of the wind turbine. In any event, the intrusion monitoring system is preferably not forming part of the wind turbine, and may even be located remotely with regard to the wind farm. The intrusion monitoring system may be associated with several wind turbines, e.g. with all of the wind turbines in the wind farm. Accordingly, the second intrusion alert signal being provided from the control system of wind turbine to the intrusion monitoring system constitutes communication out of the wind turbine, notifying the intrusion monitoring system that an intrusion event has occurred at a given wind turbine.

In response to receiving the second intrusion alert signal, the intrusion monitoring system communicatively isolates the wind turbine. This prevents all communication with the wind turbine, including the wind turbine sending communication signals to entities outside the wind turbine as well as the wind turbine receiving communication signals from entities outside the wind turbine. This prevents a malicious intruder from reaching other entities, such as other wind turbines, power plant controllers of the wind farm, substations, SCADA systems, etc., which the wind turbine is normally communicatively connected to, from the communication systems of the wind turbine. This efficiently limits the intrusion event to the wind turbine at which the intrusion event was detected. Furthermore, since the step of communicatively isolating the wind turbine is performed by the intrusion monitoring system, rather than by the control system of the wind turbine, the intruder will not be able to override a command for communicatively isolating the wind turbine.

Thus, the method according to the first aspect of the invention allows for handling of physical intrusion in a wind turbine in a safe, efficient and reliable manner, without requiring the presence of maintenance or surveillance staff at the site of the wind turbine.

The at least one safety action may further comprise shutting down the wind turbine. According to this embodiment, in addition to stopping power production of the wind turbine when an intrusion event is detected, the wind turbine is also shut down. Thus, freewheeling of the wind turbine is prevented, and the rotor may be locked. Furthermore, electrical systems may be powered off or shut down. This is further prevents the wind turbine from operating in a manner which may cause damage to the wind turbine, be detrimental to the power grid or pose a hazard to persons being present in the wind turbine.

Alternatively or additionally, the at least one safety action may further comprise deenergizing one or more electrical components of the wind turbine. This could, e.g., form part of a shut down process of the wind turbine, as described above. Deenergizing a given electrical component of the wind turbine protects the component from being operated in a manner which may cause damage to the component, as well as in a manner which may cause the component to cause damage to other components. Electrical components being deenergized may include, but are not limited to, any electric component being part of the power output circuit, in particular high/medium voltage components, such as switchgear, converter and/or transformer.

Alternatively or additionally, the at least one safety action may further comprise erasing confidential and/or sensitive data from one or more storage devices of the wind turbine. According to this embodiment, it is efficiently prevented that the intruder gains access to confidential and/or sensitive data stored at the wind turbine. Thus, this introduces a cyber security measure, in addition to the physical and personal safety measures described above.

The confidential and/or sensitive data may, e.g., include encryption keys, data related to control schemes of the wind turbine, operating data, such as sensor measurements, etc.

The step of the intrusion monitoring system communicatively isolating the wind turbine may comprise one or more of the other wind turbines of the wind farm disrupting communication with the wind turbine. According to this embodiment, it is efficiently prevented that a malicious intruder gains access to the other wind turbines of the wind farm, thus efficiently limiting the intrusion event to the wind turbine where the intrusion event was detected. Furthermore, the communication network of the wind farm may have a circular structure, in the sense that each of the wind turbines communicates with neighbouring wind turbines, and only a limited number of wind turbines are able to communicate with a power plant controller and/or entities arranged outside the wind farm. In this case communication to and from a given wind turbine is prevented if the communication with the neighbouring wind turbines is disrupted.

Since the step of disrupting the communication with the wind turbine is performed by one or more of the other wind turbines of the wind farm, the intruder will not be able to prevent the disruption of the communication by compromising the communication system of the wind turbine.

The other wind turbines of the wind farm may be instructed to disrupt the communication with the wind turbine by a central intrusion monitoring facility, in response to the central intrusion monitoring facility receiving the second intrusion alert signal. As an alternative, the second intrusion alert signal may be provided directly to the other wind turbines, and the other wind turbines may react thereon without requiring a command or instructions from a central facility. In the latter case, the other wind turbines may be regarded as forming part of the intrusion monitoring system.

The intrusion monitoring system may comprise a central intrusion monitoring facility, and the step of the intrusion monitoring system communicatively isolating the wind turbine may comprise disrupting communication between the wind turbine and the central intrusion monitoring facility. According to this embodiment, the second intrusion alert signal may be provided from the control system of the wind turbine to the central intrusion monitoring facility, and in response thereto the central intrusion monitoring facility prevents all subsequent communication to and from the wind turbine, including communication between the wind turbine and the central intrusion monitoring facility. Thus, a malicious intruder will not be able to gain access to the central intrusion monitoring facility, and from there possibly to other wind turbines being communicatively connected to the central intrusion monitoring facility, and/or to other relevant infrastructure.

The central intrusion monitoring facility may, e.g., be configured to monitor all or a subset of the wind turbines of the wind farm, at least with respect to intrusion events, and possibly also with respect to other events, such as weather events, operational and/or component failure, etc., and/or for monitoring the operation of the wind turbines. For instance, the central intrusion monitoring facility may be or form part of a power plant controller of the wind farm, in which case it may be located within the wind farm. As an alternative, the central intrusion monitoring facility may be located remotely from the wind farm, and it may be configured to monitor wind turbines located in two or more separate wind farms.

The step of the intrusion monitoring system communicatively isolating the wind turbine may comprise disrupting all external communication to and from the wind turbine. According to this embodiment, it is efficiently prevented that the intrusion event affects the other wind turbines of the wind farm and/or any other entities or infrastructure which the wind turbine is normally communicatively connected to.

The method may further comprise the step of, upon completion of a safety action, the control system of the wind turbine reporting the completion of the safety action to the intrusion monitoring system. According to this embodiment, the intrusion monitoring system receives confirmation that necessary and appropriate safety actions, including stopping power production, have been performed at the wind turbine, thus reassuring personnel operating the intrusion monitoring system that the intrusion event is being appropriately handled. This could, e.g., include communicating the completion of the safety action to a central intrusion monitoring facility.

According to this embodiment, the intrusion monitoring system may delay the initiation of the communicative isolation of the wind turbine until the confirmation regarding completion of the at least one safety action has been received, since the communicative isolation of the wind turbine would prevent such a confirmation from being provided from the control system of the wind turbine to the intrusion monitoring system. The completion of the safety action may, e.g., be reported to the intrusion monitoring system along with the second intrusion alert signal, and it may even form part of the second intrusion alert signal.

The method may further comprise the step of allowing a predefined time period to lapse from the control system of the wind turbine receives the first intrusion alert signal before the control system of the wind turbine initiates the at least one safety action.

When an intrusion event is detected, this may be due to an unauthorised, or even malicious, intruder gaining physical access to the wind turbine. However, this may also be due to authorised personnel accidentally triggering the intrusion detection system, e.g. by failing to deactivate an alarm and/or switching relevant components of the wind turbine into safety mode. In the latter case, the at least one safety action may not be required. Moreover, once the at least one safety action has been performed, it may be difficult to put the wind turbine back into operation. For instance, since the wind turbine has been communicatively isolated as part of the response to the detected intrusion event, putting the wind turbine back into operation may require the presence of service personnel at the site of the wind turbine. In the case that the wind turbine is positioned at a remote location, it may take several days before service personnel may reach the site of the wind turbine. Accordingly, initiating the at least one safety action when the detected intrusion event was in fact due to erroneous behaviour of authorised personnel may lead to significant unnecessary production loss of the wind turbine, in addition to generating the cost of sending service personnel to the site.

By allowing a predefined time period to lapse from the control system of the wind turbine receives the first intrusion alert signal before the control system of the wind turbine initiates the at least one safety action, authorised personnel having accidentally triggered the intrusion detection system will be allowed time to reset the intrusion detection system, thus cancelling the automatic safety procedure and preventing that the at least one safety action is initiated.

Thus, the control system of the wind turbine may refrain from initiating the at least one safety action in the case that a cancel signal is received during the predefined time period. As described above, such a cancel signal may be provided by authorised personnel having accidentally triggered the intrusion detection signal.

The method may further comprise the step of a service technician inspecting the wind turbine and restoring operation of the wind turbine. This could, e.g., follow after shutdown of the wind turbine.

In any event, in the case that an intrusion event has been detected, which gives rise to a suspicion that an intruder has gained physical access to the wind turbine, it will normally be relevant to manually inspect the wind turbine in order to investigate possible damage on the wind turbine caused by the intruder, and to repair such damage. Furthermore, since the wind turbine has been communicatively isolated as part of the safety process following the detection of the intrusion event, it will not be possible to restore operation of the wind turbine, including restarting power production, remotely, because the communicative isolation of the wind turbine prevents communication of relevant control commands for this purpose to the wind turbine. Thus, as part of the safety process following the detection of the intrusion event, it will normally be relevant to schedule a service visit to the wind turbine by a relevant service technician.

According to a second aspect the invention provides an intrusion handling system for a wind turbine, the wind turbine forming part of a wind farm comprising a plurality of wind turbines, the intrusion handling system comprising:
- an intrusion detection system being configured to detect an intrusion event in the wind turbine,
- a control system of the wind turbine being configured to initiate at least one safety action at the wind turbine, and
- an intrusion monitoring system being communicatively connected to the wind turbine and to at least one other wind turbine of the wind farm,

wherein the intrusion detection system is configured to generate a first intrusion alert signal, in response to detecting an intrusion event in the wind turbine, and to provide the first intrusion alert to the control system of the wind turbine,
wherein the control system of the wind turbine is configured to, in response to receiving the first intrusion signal, initiate at least one safety action at the wind turbine, where the at least one safety action comprises stopping power production of the wind turbine, and to provide a second intrusion alert signal to the intrusion monitoring system, and
wherein the intrusion monitoring system is configured to communicatively isolate the wind turbine.

The intrusion handling system according to the second aspect of the invention is configured to perform the method according to the first aspect of the invention, and the remarks set forth above with reference to the first aspect of the invention are therefore equally applicable here.

The intrusion monitoring system may comprise a central intrusion monitoring facility. This has already been described above with reference to the first aspect of the invention.

The central intrusion monitoring facility may be or form part of a central data collection and/or surveillance system for the wind farm, and possibly for several wind farms, e.g. in the form of a SCADA system.

### BRIEF DESCRIPTION OF THE DRAWINGS

The invention will now be described with reference to the accompanying drawings in which
Fig. 1 is a block diagram illustrating a system according to an embodiment of the invention, and
Fig. 2 is a flow chart illustrating a method according to an embodiment of the invention.

### DETAILED DESCRIPTION OF THE DRAWINGS

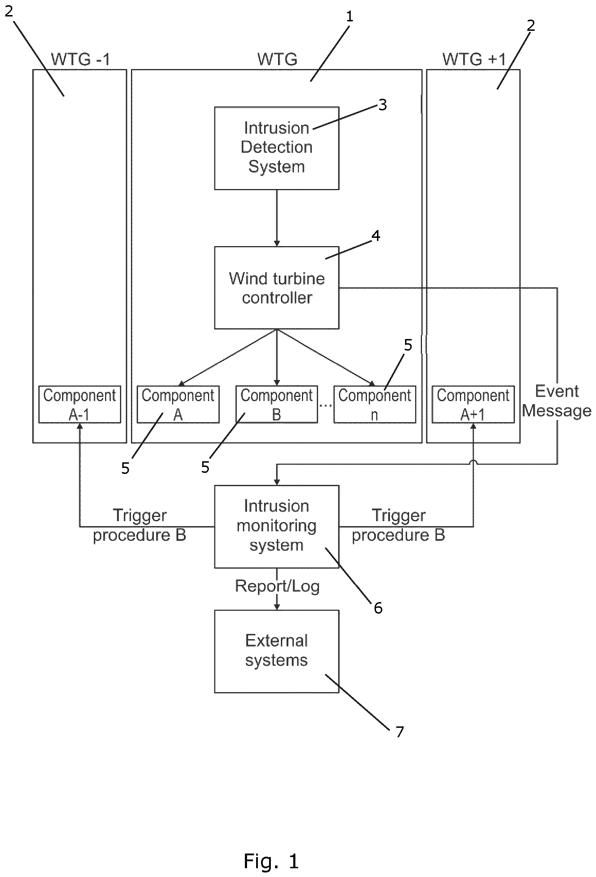

Fig. 1 is a block diagram illustrating an intrusion handling system for a wind turbine 1 according to an embodiment of the invention. The wind turbine forms part of a wind farm comprising a plurality of further wind turbines 2, two of which are illustrated, in addition to the wind turbine 1. The intrusion handling system illustrated in Fig. 1 may be operated in the following manner.

An intrusion detection system 3, forming part of or being connected to the wind turbine 1, detects an intrusion event in the wind turbine 1. This could, e.g., include detecting opening of a door of the wind turbine 1, movement inside or in the vicinity of the wind turbine 1, and/or detecting any other kind of event or action which could indicate physical intrusion in the wind turbine 1.

Upon detection of the intrusion event, the intrusion detection system 3 generates a first intrusion alert signal and provides the first intrusion alert signal to a control system 4 of the wind turbine 1. In response to receiving the first intrusion alert signal, the control system 4 of the wind turbine 1 initiates at least one safety action. This includes forwarding control commands to one or more components 5 of the wind turbine 1, so as to cause the wind turbine 1 to stop power production.

The control system 4 of the wind turbine 1 further provides a second intrusion alert signal to an intrusion monitoring system 6 which is also in communicative contact with the other wind turbines 2 of the wind farm. The second intrusion alert signal may be identical to the first intrusion alert signal, in which case the control system 4 of the wind turbine 1 simply forwards the first intrusion alert signal, as received from the intrusion detection system 3, to the intrusion monitoring system 6. As an alternative, the second intrusion alert signal may be generated by the control system 4 of the wind turbine 1 and thus differ from the first intrusion alert signal.

In response to receiving the second intrusion alert signal, the intrusion monitoring system initiates communicative isolation of the wind turbine 1. In the embodiment illustrated in Fig. 1, this includes instructing at least some of the other wind turbines 2 to disrupt communication with the wind turbine 1. Furthermore, communication between the intrusion monitoring system 6 and the wind turbine 1 may be disrupted.

Thus, the wind turbine 1 is now in a safe state where power production has stopped, and operation of the wind turbine 1 in a manner which may cause damage to the wind turbine 1 and/or to persons present in or near the wind turbine is therefore prevented. Furthermore, the wind turbine 1 is communicatively isolated, thus preventing that a malicious intruder uses the wind turbine 1 for accessing other wind turbines 2 of the wind farm, the intrusion monitoring system 6 and/or other kinds of infrastructure normally being communicatively connected to the wind turbine 1.

Finally, the intrusion monitoring system 6 sends a report or log regarding the intrusion event and the handling thereof to an external system 7, e.g. in order to allow the external system 7 to keep track of intrusion events.

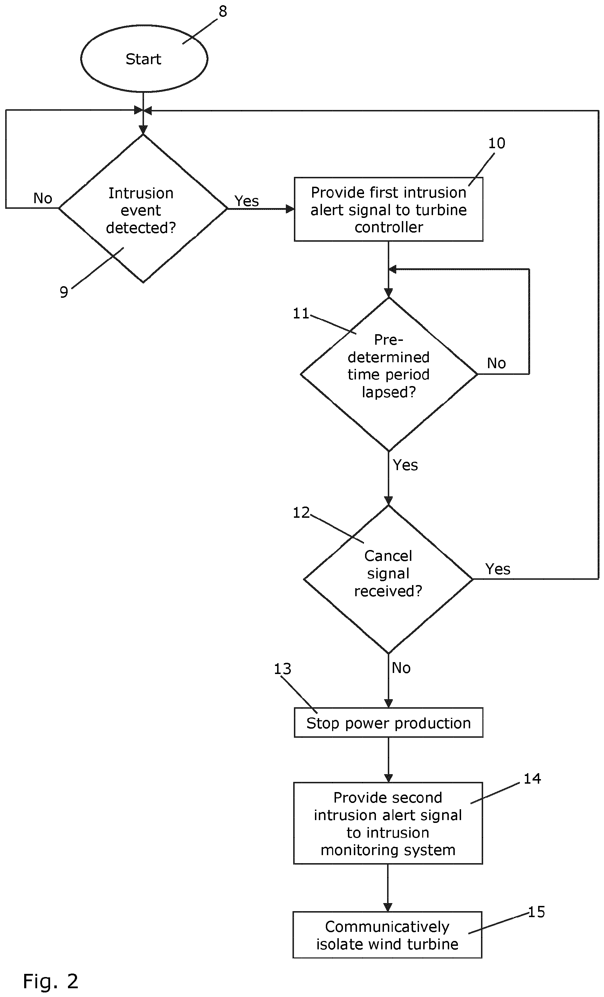

Fig. 2 is a flow chart illustrating a method according to an embodiment of the invention. The process is started at step 8. At step 9 it is investigated whether or not an intrusion event in a wind turbine has been detected by an intrusion detection system. If this is not the case, the process is returned to step 9 for continued monitoring for intrusion events.

In the case that step 9 reveals that an intrusion event in the wind turbine has been detected, the process is forwarded to step 10, where the intrusion detection system provides a first intrusion alert signal to a control system of the wind turbine. At step 11, the control system of the wind turbine investigates whether or not a predefined time period has lapsed since the first intrusion alert signal was received. If this is not the case, the process is returned to step 11 so as to await the lapse of the predefined time period.

In the case that step 11 reveals that the predefined time period has lapsed, the process is forwarded to step 12, where it is investigated whether or not a cancel signal has been received during the predefined time period. In the case that the triggering of the intrusion detection system was due to an error, authorised personnel may reset the system and/or cancel initiation of measures for handling the detected intrusion event by providing a cancel signal to the control system of the wind turbine within the predefined time period following the receipt of the intrusion alert signal. Accordingly, in the case that step 12 reveals that a cancel signal was received during the predefined time period, this indicates that the detected intrusion event was due to an error, and therefore the handling of the intrusion event is aborted, and the process is returned to step 9 for continued monitoring for intrusion events.

In the case that step 12 reveals that a cancel signal was not received during the predefined time period, it can be assumed that the detected intrusion event is a real intrusion event, and therefore the process is forwarded to step 13, where the control system of the wind turbine initiates at least one safety action, including stopping power production of the wind turbine.

At step 14 the control system of the wind turbine provides a second intrusion alert signal to an intrusion monitoring system, and at step 15 the intrusion monitoring system communicatively isolates the wind turbine.

## Claims

1. A method for handling physical intrusion in a wind turbine (1), the wind turbine (1) forming part of a wind farm comprising a plurality of wind turbines (1, 2), the method comprising the steps of:
- detecting an intrusion event in the wind turbine (1) by means of an intrusion detection system (3),
- the intrusion detection system (3) generating a first intrusion alert signal and providing the first intrusion alert signal to a control system (4) of the wind turbine (1),
- in response to receiving the first intrusion alert signal, the control system (4) of the wind turbine (1) initiating at least one safety action at the wind turbine (1), wherein the at least one safety action comprises stopping power production of the wind turbine (1) and providing a second intrusion alert signal to an intrusion monitoring system (6), and
- the intrusion monitoring system (6) communicatively isolating the wind turbine (1).

2. A method according to claim 1, wherein the at least one safety action further comprises shutting down the wind turbine (1).

3. A method according to claim 1 or 2, wherein the at least one safety action further comprises deenergizing one or more electrical components (5) of the wind turbine (1).

4. A method according to any of the preceding claims, wherein the at least one safety action further comprises erasing confidential and/or sensitive data from one or more storage devices of the wind turbine (1).

5. A method according to any of the preceding claims, wherein the step of the intrusion monitoring system (6) communicatively isolating the wind turbine (1) comprises one or more of the other wind turbines (2) of the wind farm disrupting communication with the wind turbine (1).

6. A method according to any of the preceding claims, wherein the intrusion monitoring system (6) comprises a central intrusion monitoring facility, and wherein the step of the intrusion monitoring system (6) communicatively isolating the wind turbine (1) comprises disrupting communication between the wind turbine (1) and the central intrusion monitoring facility.

7. A method according to any of the preceding claims, wherein the step of the intrusion monitoring system (6) communicatively isolating the wind turbine (1) comprises disrupting all external communication to and from the wind turbine (1).

8. A method according to any of the preceding claims, further comprising the step of, upon completion of a safety action, the control system (4) of the wind turbine (1) reporting the completion of the safety action to the intrusion monitoring system (6).

9. A method according to any of the preceding claims, further comprising the step of allowing a predefined time period to lapse from the control system (4) of the wind turbine (1) receives the first intrusion alert signal before the control system (4) of the wind turbine (1) initiates the at least one safety action.

10. A method according to claim 9, wherein the control system (4) of the wind turbine (1) refrains from initiating the at least one safety action in the case that a cancel signal is received during the predefined time period.

11. A method according to any of the preceding claims, further comprising the step of a service technician inspecting the wind turbine (1) and restoring operation of the wind turbine (1).

12. An intrusion handling system for a wind turbine (1), the wind turbine (1) forming part of a wind farm comprising a plurality of wind turbines (1, 2), the intrusion handling system comprising:
- an intrusion detection system (3) being configured to detect an intrusion event in the wind turbine (1),
- a control system (4) of the wind turbine (1) being configured to initiate at least one safety action at the wind turbine (1), and
- an intrusion monitoring system (6) being communicatively connected to the wind turbine (1) and to at least one other wind turbine (2) of the wind farm,
wherein the intrusion detection system (3) is configured to generate a first intrusion alert signal, in response to detecting an intrusion event in the wind turbine (1), and to provide the first intrusion alert to the control system (4) of the wind turbine (1),
wherein the control system (4) of the wind turbine (1) is configured to, in response to receiving the first intrusion signal, initiate at least one safety action at the wind turbine (1), where the at least one safety action comprises stopping power production of the wind turbine (1), and to provide a second intrusion alert signal to the intrusion monitoring system (6), and
wherein the intrusion monitoring system (6) is configured to communicatively isolate the wind turbine (1).

13. An intrusion handling system according to claim 12, wherein the intrusion monitoring system (6) comprises a central intrusion monitoring facility.

14. An intrusion handling system according to claim 13, wherein the central intrusion monitoring facility (6) is or forms part of a central data collection and/or surveillance system for the wind farm.
